# EUROPÄISCHE PATENTANMELDUNG

(11) **EP 0 893 872 A2**
(43) Veröffentlichungstag der Anmeldung: **27.01.1999**
(21) Anmeldenummer: 98810615.9
(22) Anmeldetag: 02.07.1998
(51) Int. Cl.: H02K 9/00

(54) **Generatorkühlsystem**

(30) Priorität: 24.07.1997 DE 19731852
(71) Anmelder: Asea Brown Boveri AG, 5401 Baden (CH)
(72) Erfinder: Blatter, Richard, 5408 Ennetbaden (CH); Elkuch, Philipp, 8006 Zürich (CH); Fischer, Kurt, 5507 Mellingen (CH); Liebig, Erhard, Dr., 71254 Ditzingen (DE)
(74) Vertreter: Lück, Gert, Dr.

(57) **Zusammenfassung**

Bei einem Generatorkühlsystem (10) für einen in einem Kraftwerk zur Stromerzeugung eingesetzten Generator, welcher Generator einen Generatorkühler (11) aufweist, der zusammen mit weiteren Kühlern (12,..,17) in einem geschlossenen Zwischenkühlkreislauf (18) angeordnet ist, welcher Zwischenkühlkreislauf (18) über wenigstens einen Zwischenkühler (19, 20) Wärme an ein Hauptkühlwassersystem abgibt, wird eine erhöhte Capability dadurch erreicht, dass im Zwischenkühlkreislauf (18) Mittel (32) vorgesehen sind, welche die Wärmeübertragung von dem Generatorkühler (11) in das Hauptkühlwassersystem verbessern.

## Beschreibung

### TECHNISCHES GEBIET

Die vorliegende Erfindung bezieht sich auf das Gebiet der Kraftwerkstechnik. Sie betrifft ein Generatorkühlsystem für einen in einem Kraftwerk zur Stromerzeugung eingesetzten Generator, welcher Generator einen Generatorkühler aufweist, der zusammen mit weiteren Kühlern in einem geschlossenen Zwischenkühlkreislauf angeordnet ist, welcher Zwischenkühlkreislauf über wenigstens einen Zwischenkühler Wärme an ein Hauptkühlwassersystem abgibt.

### STAND DER TECHNIK

Generatoren, die in einem Kraftwerk zur Stromerzeugung eingesetzt sind, müssen zur Abführung der beim Betrieb entstehenden Verlustwärme gekühlt werden. Je nach dem Kühlsystem unterscheidet man dabei offen gekühlte Generatoren und geschlossen gekühlte Generatoren. Die offen gekühlten Generatoren arbeiten mit Luftkühlung. Bei den geschlossen gekühlten Generatoren kann Luftkühlung, Wasserstoff(H₂)-Kühlung, Wasserkühlung oder eine gemischte Kühlung eingesetzt werden, bei der der Rotor mit Wasserstoff und Wasser und der Stator mit Wasser gekühlt werden.

Die maximale Scheinleistung, welche ein Generator abgegeben kann, hängt stark von der Temperatur der Bauteile, d.h. von der Temperatur des Kühlmediums ab. Je niedriger die Temperatur der Wärmesenke ist, an welche die Verlustwärme abgegeben wird, um so höher ist die maximal fahrbare Scheinleistung des Generators bzw. um so länger ist die Lebensdauer des Generators bei einer vorgegebenen, fixierten Scheinleistung. Eventuell ist dann auch der Uebergang von einer komplexen, kostspieligen zu einer einfacheren, billigeren Generatorkühlung, beispielsweise von einer Wasserstoffkühlung zu einer Luftkühlung, möglich.

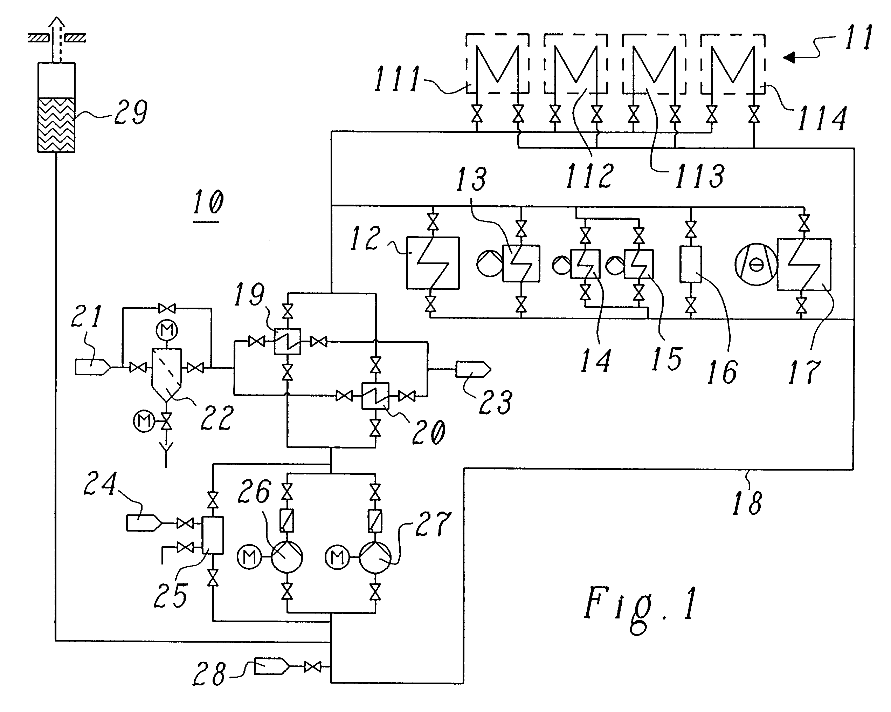

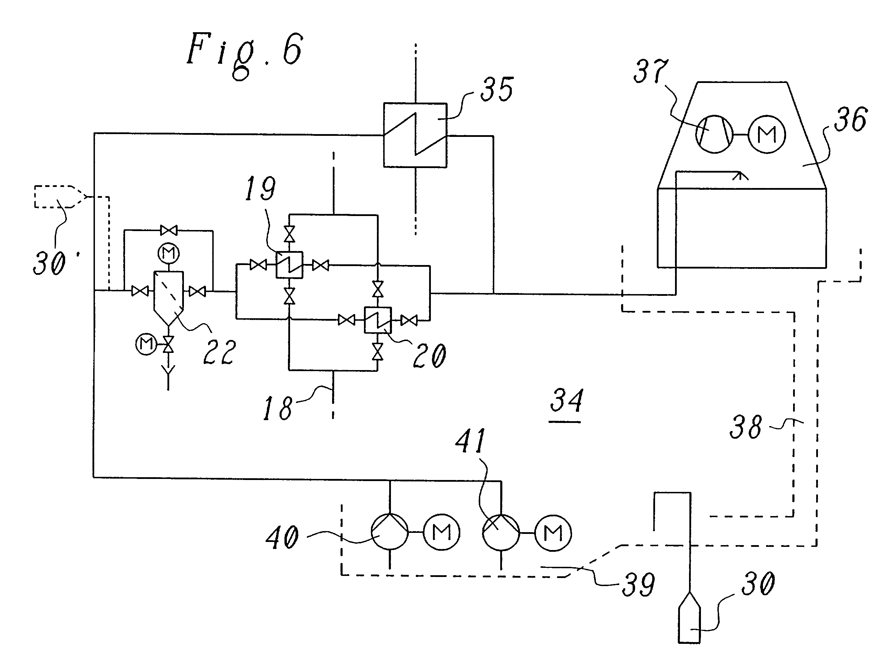

Ein beispielhaftes, bekanntes Generatorkühlsystem ist in Fig. 1 wiedergegeben. Das Generatorkühlsystem 10 umfasst einen geschlossenen Zwischenkühlkreislauf 18, in welchem ein Kühlmedium, in der Regel Wasser, zirkuliert. Im Zwischenkühlkreislauf 18 sind in Parallelschaltung ein Generatorkühler 11 mit mehreren Einzelkühlern 111 bis 114 sowie als weitere Kühler z.B. ein Oelkühler 12, ein Kesselpumpenkühler 13, zwei Speisewasserpumpenkühler 14 und 15, ein Probeentnahmekühler 16 sowie ein Brenngaskompressorkühler 17 angeordnet. Das Kühlwasser wird von zwei parallel arbeitenden Kühlwasserpumpen 26 und 27 durch den Zwischenkühlkreislauf 18 gepumpt. Es strömt durch zwei parallel angeordnete Zwischenkühler 19 und 20, die vom Hauptkühlwasser des Hauptkühlwassersystems (34 in Fig. 6) durchströmt werden. In Fig. 1 ist das Hauptkühlwassersystem nicht dargestellt. Die Verbindung zu diesem System ist durch einen Eingang 21 und einen Ausgang 23 für das Hauptkühlwasser symbolisiert. Vor den Zwischenkühlern 19, 20 kann im Hauptkühlwassersystem ein Wasserfilter 22 angeordnet sein. Weiterhin kann parallel zu den Kühlwasserpumpen 26, 27 eine Dosiereinrichtung 25 für ein Schutzmittel (Inhibitor) geschaltet sein, die über einen Eingang 24 mit einem geeigneten Schutzmittel beschickt wird. Der geschlossene Zwischenkühlkreislauf kann ausserdem über einen Eingang 28 mit Zusatzwasser aufgefüllt werden. Schliesslich muss der Kreislauf noch mit einem Ausgleichsbehälter 29 verbunden sein. Die einzelnen Anlagenteile sind jeweils mit Ventilen ausgestattet, die in den Figuren durch entsprechende Symbole dargestellt aber der Einfachheit halber nicht mit Bezugszeichen versehen sind.

Ein beispielhaftes dazu passendes Hauptkühlwassersystem 34 ist in Fig. 6 wiedergegeben. Die Zwischenkühler 19, 20 sind in diesem System parallel zu einem Hauptkondensator 35 des Kraftwerkes angeordnet. Das aufgewärmte Hauptkühlwasser wird in einem mit einem Kühlturmventilator 37 ausgestatteten Kühlturm 36 gekühlt, sammelt sich über einen Rücklauf 38 in einem Sammelbecken 39 und wird von dort mittels zweier paralleler Hauptkühlwasserpumpen 40, 41 zu den Kühlstellen 19, 20 bzw. 35 zurückgepumpt. Das im Kühlturm 36 verdunstende Wasser wird durch einen Eingang 30 für Kühlturmzusatzwasser ergänzt. Anstelle des Kühlturms 36 kann im Zusammenhang mit einer Durchflusskühlung auch ein Wasserreservoir, z.B. ein Fluss, ein See, oder das Meer, treten.

Der Generatorkühler 11 kühlt in dem System nach Fig. 1 bzw. 6 das für die Kühlung des Generators verwendete Kühlmedium (H₂, Luft, Wasser). Die Temperatur des Kühlmediums lässt sich dabei durch die Temperatur der Wärmesenke (im herkömmlichen Fall des Hauptkühlwassers), die Grädigkeiten der eingesetzten Wärmeübertrager (Kühler) und die Massenstromverhältnisse in den Kühlkreisen beeinflussen. Während in der Vergangenheit die Leistungsfähigkeit der Generatoren gegenüber der Anlagenleistung (z.B. der eingesetzten Gasturbinen) mehr als ausreichend war und im gesamten Aussenlufttemperaturbereich (bei Kühlturmkühlung) bzw. Wassertemperaturbereich (bei Durchflusskühlung) hohe Leistungsreserven zur Verfügung standen, stösst heute die Kühlung der Generatoren aufgrund des Anstiegs der Anlagenleistung, des zunehmenden Kostendrucks, der Leistungsbegrenzung der luftgekühlten Generatoren auf derzeit 300..350 MW, usw., an ihre Grenzen. Aber auch bei kleineren Anlagen oder beispielsweise im Retrofit-Geschäft kann der effizienten Generatorkühlung eine massgebliche Rolle zukommen.

Konsequenzen aus dieser Situation wären:
- ein Uebergang von der Luftkühlung zur H₂-Kühlung
- die Inkaufnahme eines Leistungs- und damit Kostensprungs
- Einschränkungen beim Leistungsfaktor (cos ϕ)
- Verlassen der vorgeschriebenen Isolationsklasse um einige Grade (z.B. B + 5K)
- Reduzierung der Lebensdauer des Generators.

Ein weiterer Grund, die Generatorkühlung zu verbessern, kann z.B. auch in der Leistungserhöhung einer bestehenden Anlage durch Prozessverbesserungen bestehen. Man vermeidet dann der Generatorersatz.

### DARSTELLUNG DER ERFINDUNG

Es ist daher Aufgabe der Erfindung, ein Generatorkühlsystem zu schaffen, welches mit geringem Zusatzaufwand eine Erhöhung der Anlagenleistung ohne nachteilige Konsequenzen beim Generator ermöglicht.

Die Aufgabe wird bei einem Generatorkühlsystem der eingangs genannten Art dadurch gelöst, dass im Zwischenkühlkreislauf Mittel vorgesehen sind, welche die Wärmeübertragung von dem Generatorkühler in das Hauptkühlwassersystem verbessern. Durch die erfindungsgemässe Verbesserung der Wärmeabfuhr im Zwischenkühlkreislauf kann die Anlagenleistung gesteigert werden, ohne dass kostspielige und aufwendige Modifikationen am Generator selbst vorgenommen oder Einschränkungen beim Betrieb des Generators in Kauf genommen werden müssen.

Die Wärmeabfuhr im Zwischenkühlkreislauf kann wahlweise dadurch verbessert werden, dass entweder die Kühler bzw. Kühlstellen im Zwischenkreislauf anders geschaltet werden, oder dass andere Wärmesenken verwendet werden, oder dass eine veränderte Schaltung mit einer Aenderung der Wärmesenke kombiniert wird.

Eine erste bevorzugte Ausführungsform des Generatorkühlsystems nach der Erfindung zeichnet sich dadurch aus, dass der Generatorkühler und die weiteren Kühler im Zwischenkühlkreislauf in Serie geschaltet sind, und dass der Generatorkühler zwischen dem wenigstens einen Zwischenkühler und den weiteren Kühlern angeordnet ist. Durch diese Art der Serieschaltung fliesst das im Zwischenkühler gekühlte Medium des Zwischenkühlkreises zunächst ungeteilt durch den Generatorkühler, was zu einem erhöhten Massenstrom führt und damit die Wärmeabfuhr deutlich verbessert.

Eine bevorzugte Weiterbildung dieser Ausführungsform ist dadurch gekennzeichnet, dass das Hauptkühlwassersystem mit einem Kühlturm ausgerüstet ist, und dass der wenigstens eine Zwischenkühler von Kühlturmzusatzwasser durchflossen wird. Wird als Kühlturmzusatzwasser z.B. Flusswasser verwendet, lässt sich hierdurch die Wärmesenke gegenüber dem reinen Hauptkühlwasser in der Temperatur erniedrigen, wodurch die Wärmeabfuhr weiter verbessert wird.

Eine zweite bevorzugte Ausführungsform des erfindungsgemässen Generatorkühlsystems zeichnet sich dadurch aus, dass das Hauptkühlwassersystem mit einem Kühlturm ausgerüstet ist, und dass der wenigstens eine Zwischenkühler von Kühlturmzusatzwasser durchflossen wird. Wird als Kühlturmzusatzwasser z.B. Flusswasser verwendet, lässt sich hierdurch die Wärmesenke gegenüber dem reinen Hauptkühlwasser in der Temperatur erniedrigen, wodurch die Wärmeabfuhr verbessert wird, ohne dass die Schaltung der Kühlstellen im Zwischenkühlkreislauf verändert werden muss.

Eine weitere bevorzugte Ausführungsform ist dadurch gekennzeichnet, dass in dem Zwischenkühlkreislauf vor dem Generatorkühler ein zusätzlicher Vorschaltkühler angeordnet ist, welcher von einem Kühlmedium durchflossen wird. Hierdurch ist es möglich, durch ein Kühlmedium, welches in der Temperatur deutlich unter dem Hauptkühlwasser liegt, eine Wärmesenke mit sehr niedriger Temperatur bereitzustellen, welche die Wärmeabfuhr drastisch verbessert. In einer Weiterbildung dieser Ausführungsform kann, wenn das Hauptkühlwassersystem mit einem Kühlturm ausgerüstet ist, das Kühlmedium Kühlturmzusatzwasser sein. Das Kühlmedium kann aber auch Kaltwasser aus einer Kälteanlage sein. Das Kühlmedium kann weiterhin eine kalte Solelösung sein, wie sie in einem Chemieunternehmen anfallen kann. Das Kühlmedium kann schliesslich durch Entspannung abgekühltes, kaltes Erdgas sein.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Schema eines geschlossenen Zwischenkühlkreises eines Generatorkühlsystems nach dem Stand der Technik;
- Fig. 2: das zu Fig. 1 vergleichbare Schema eines ersten bevorzugten Ausführungsbeispiels der Erfindung mit Kühlturmzusatzwasser als Wärmesenke;
- Fig. 3: das zu Fig. 1 vergleichbare Schema eines zweiten bevorzugten Ausführungsbeispiels der Erfindung mit einer Mischung aus Kühlturmzusatzwasser und Hauptkühlwasser als Wärmesenke;
- Fig. 4: das zu Fig. 1 vergleichbare Schema eines dritten bevorzugten Ausführungsbeispiels der Erfindung mit einer Serieschaltung des Generatorkühlers und anderer Kühlstellen;
- Fig. 5: das zu Fig. 1 vergleichbare Schema eines vierten bevorzugten Ausführungsbeispiels der Erfindung mit einem zusätzlichen Vorschaltkühler im Zwischenküblkreislauf vor dem Generatorkühler; und
- Fig. 6: die an sich bekannte beispielhafte Verknüpfung des Zwischenkühlkreises nach Fig. 1 mit einem Hauptkühlwassersystem mit Kühlturm.

### WEGE ZUR AUSFÜHRUNG DER ERFINDUNG

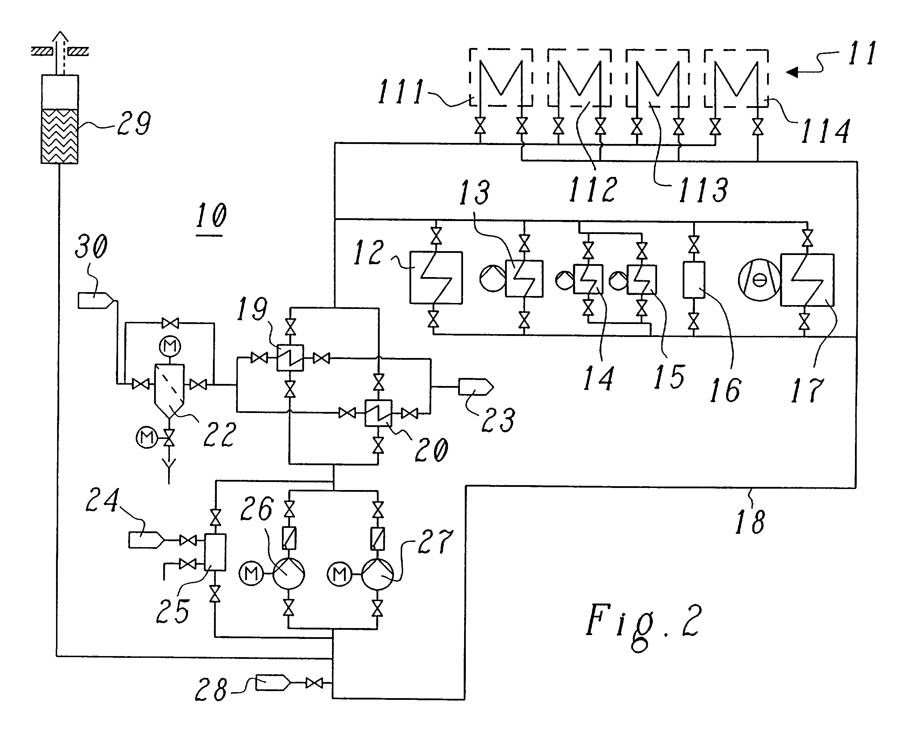

Wie bereits eingangs erwähnt worden ist, können insbesondere luftgekühlte Generatoren in Kraftwerken, bei denen das Hauptkühlwasser durch einen Kühlturm geschickt wird, Leistungsprobleme aufweisen. Diese können bei höheren Umgebungstemperaturen z.B. oberhalb 13°C auftreten. Ob Leistungsprobleme auftreten, hängt aber auch von vielen anderen Faktoren ab, wie z.B. von der Art der Anlage, von den klimatischen Bedingungen (Luftfeuchtigkeit etc.), von der Art des Kühlsystems usw.. Gemäss der Erfindung werden diese Probleme dadurch beseitigt, dass die Wärmeabfuhr im Zwischenkühlkreislauf des Generatorkühlsystems verbessert wird. Ein erstes bevorzugtes Ausführungsbeispiel für ein verbessertes Kühlsystem nach der Erfindung ist in Fig. 2 im Schaltungsschema wiedergegeben. Der Aufbau des Generatorkühlsystems gleicht im wesentlichen dem in Fig. 1 dargestellten. Auch hier wird das Kühlmedium des geschlossenen Zwischenkühlkreislaufes 18 durch Zwischenkühler 19, 20 geschickt, die mit dem Hauptkühlwassersystem über den Hauptkühlwasserausgang 23 in Verbindung stehen. Im Unterschied zu der Schaltung aus Fig. 1 wird hier jedoch nicht das Hauptkühlwasser selbst durch die Zwischenkühler 19, 20 geschickt, sondern über den Eingang 30 das Kühlturmzusatzwasser, welches zum Ersatz der Wasserverluste des Hauptkühlwassersystems infolge Verdunstung im Kühlturm und Abschlämmung benötigt wird. Eine entsprechende Aenderung im System der Fig. 6 würde bedeuten, dass dort anstelle des durchgezogen eingezeichneten der gestrichelt eingezeichnete Eingang 30' zur Einspeisung des Kühlturmzusatzwassers verwendet wird, und die Verbindung des Wasserfilters 22 zum Hauptkühlwassersystem wegfällt.

Die weltweiten Mittelwerte für die Temperaturen von Hauptkühlwasser und Kühlturmzusatzwasser bzw. Make-Up (Flusswasser, Stadtwasser, Oberflächenwasser) in Abhängigkeit von der Aussentemperatur werden durch folgende typische Werte repräsentiert:

| T_{ambient} | Make-Up | Haupt-KW |
|---|---|---|
| -15°C | 5°C | 15°C |
| 15°C | 15°C | 23°C |
| 35°C | 24°C | 33°C |

Da das Kühlturmzusatzwasser (Make-Up) bei jeder Aussentemperatur in der Temperatur deutlich unter dem Hauptkühlwasser liegt, lässt sich so über die Zwischenkühler 19, 20 die Verlustwärme aus dem Generator wesentlich besser abführen, was direkt zu einer verbesserten Leistung des Generators führt.

### Beispiel:

In dem geschlossenen Zwischenkühlkreislauf 18 zirkuliert (durch die Zwischenkühler 19, 20) ein Massenstrom von 140 kg/s, von dem 71 kg/s durch den Generatorkühler 11 und 69 kg/s durch die übrigen Kühler 12,..,17 strömen. Um bei einer Umgebungstemperatur von 15°C im Generatorkühler eine Verlustleistung von ca. 4000 kW und in den übrigen Kühlern eine Verlustleitung von ca. 3300 kW abzuführen, wird bei einer Eindickung von E=2 im Hauptkühlsystem ein Massenstrom von 112 kg/s aus Flusswasser als Kühlturmzusatzwasser durch die Zwischenkühler geschickt.

Neben dem durch das Kühlturmzusatzwasser erreichbaren sehr niedrigen Temperaturniveau ergeben sich bei diesem Ausführungsbeispiel durch die Herausnahme der Zwischenkühler 19, 20 aus dem Kreislauf des Hauptkühlwassersystems die folgenden weiteren Vorteile:
- der Kühlturm ist hinsichtlich der Bedingungen im Hauptkondensator kostenoptimal auslegbar
- die saisonalen Unterschiede können am besten ausgeglichen werden
- die Zwischenkühler können ohne Beschränkung durch Druckverluste optimal ausgelegt werden
- es ist ein vom Hauptkühlwasser unabhängiger Betrieb des geschlossenen Zwischenkühlkreislauls möglich.

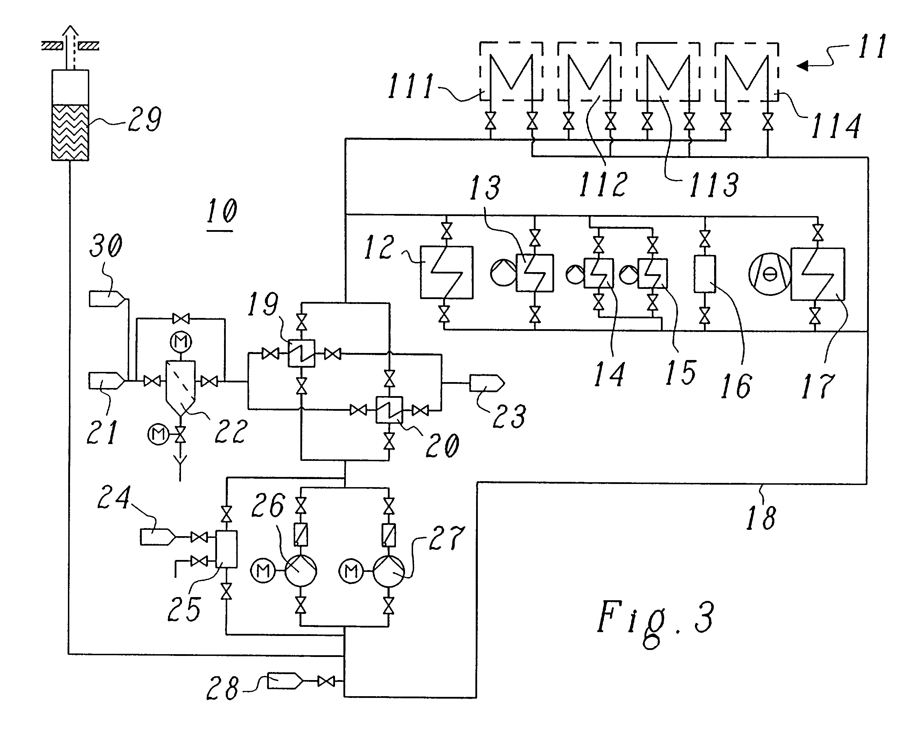

Problematisch kann bei dem Beispiel aus Fig. 2 sein, dass der Massenstrom des Kühlturmzusatzwassers massgeblich von der Eindickung im Kühlturm abhängt und daher nicht den Kühlbedürfnissen in den Zwischenkühlern 19, 20 entsprechend frei gewählt werden kann. Um dieses Problem zu umgehen, können gemäss einem weiteren bevorzugten, in Fig. 3 dargestellten Ausführungsbeispiel der Erfindung die Zwischenkühler 19, 20 mit einer Mischung aus Hauptkühlwasser (Eingang 21) und Kühlturmzusatzwasser (Eingang 30) betrieben werden. Hierdurch ist es möglich, bei gleichzeitig gegenüber dem Hauptkühlwasser abgesenkten Temperaturen die Massenströme durch die Zwischenkühler 19, 20 nach Bedarf in gewissen Grenzen zu variieren. Im System der Fig. 6 würde auch in diesem Fall wieder anstelle des durchgezogen eingezeichneten Eingangs 30 der gestrichelt eingezeichnete Eingang 30' zur Einspeisung des Kühlturmzusatzwassers verwendet werden, ohne das die Verbindung zwischen Wasserfilter 22 und Hauptkühlkreis wegfällt.

### Beispiel:

In dem geschlossenen Zwischenkühlkreislauf 18 zirkuliert (durch die Zwischenkühler 19, 20) wiederum ein Massenstrom von 140 kg/s, von dem 71 kg/s durch den Generatorkühler 11 und 69 kg/s durch die übrigen Kühler 12,..,17 strömen. Um bei einer Umgebungstemperatur von 15°C im Generatorkühler eine Verlustleistung von ca. 4000 kW und in den übrigen Kühlern eine Verlustleitung von ca. 3300 kW abzuführen, wird durch die Zwischenkühler 19, 20 ein Massenstrom des Kühlmediums von 153 kg/s geschickt, der sich bei einer Eindickung von z.B. E=2 aus 112 kg/s Kühlturmzusatzwasser und 41 kg/s Hauptkühlwasser, oder bei einer Eindickung von z.B. E=5 aus 70 kg/s Kühlturmzusatzwasser und 83 kg/s Hauptkühlwasser zusammensetzt.

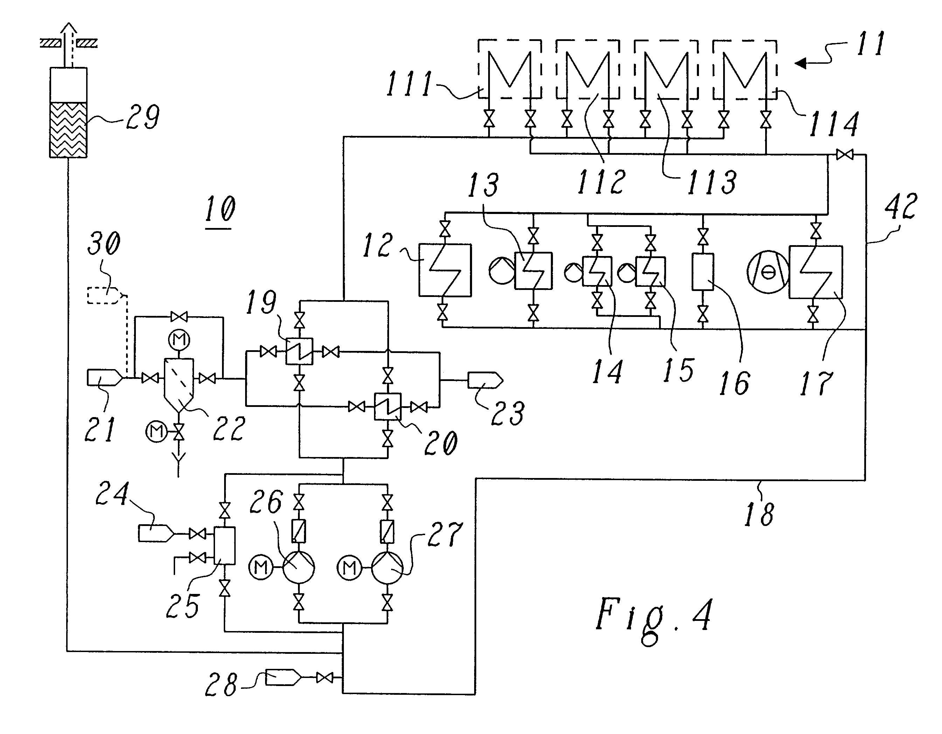

Eine andere Möglichkeit der Verbesserung der Wärmeabfuhr, besteht darin, gemäss dem in Fig. 4 gezeigten Ausführungsbeispiel die Schaltung der Kühlstellen bzw. Kühler 11 bis 17 im Zwischenkühlkreislauf zu verändern. Besonders günstig ist es dabei, wenn gemäss Fig. 4 der Generatorkühler 11 und die weiteren Kühler 12,..,17 im Zwischenkühlkreislauf 18 in Serie geschaltet sind, und wenn der Generatorkühler 11 zwischen dem wenigstens einen Zwischenkühler 19, 20 und den weiteren Kühlern 12,..,17 angeordnet ist. Da das in den Zwischenkühlern 19, 20 abgekühlte Kühlmedium des Zwischenkühlkreislaufs 18 auf diese Weise ungeteilt zunächst durch den Generatorkühler 11 strömt, ergibt sich eine verbesserte Wärmeabfuhr. Zur Ueberbrückung der Parallelschaltung der weiteren Kühler 12,..,17 kann zusätzlich eine mit einem Ventil ausgestattete Bypassleitung 42 vorgesehen werden, die den Betrieb des Generatorkühlers 11 unabhängig von den anderen Kühlern 12,..,17 gewährleistet. Um im Falle von defekten Generator-Einzelkühlern 111,..,114 nicht die gesamte Anlage abstellen zu müssen, sondern mit verminderter Leistung den Betrieb aufrecht zu erhalten, müssen die Einzelkühler jeweils einzeln bypassbar sein. Selbstverständlich lassen sich in der Serieschaltung der Fig. 4 die Zwischenkühler 19, 20 mit den entsprechenden Vorteilen sowohl ausschliesslich mit Hauptkühlwasser (Eingang 21), als auch ausschliesslich mit Kühlturmzusatzwasser (gestrichelter Eingang 30), als auch mit einer Mischung beider Medien (Eingänge 21 und 30) betreiben.

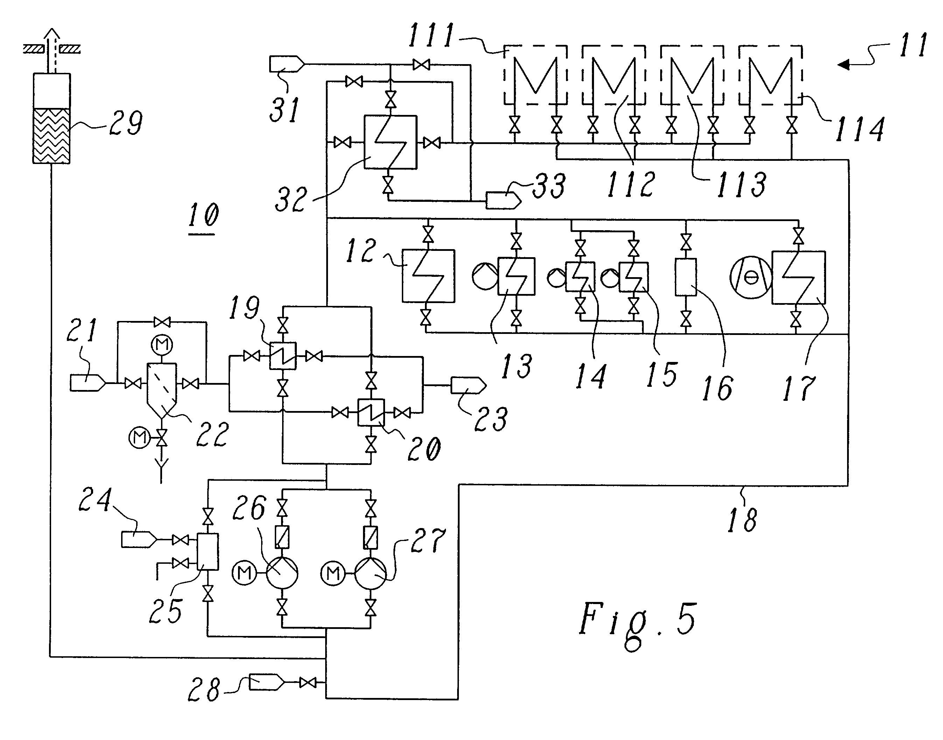

Ein weiteres bevorzugtes Ausführungsbeispiel des erfindungsgemässen Generatorkühlsystems ist in der Fig. 5 wiedergegeben. Im Unterschied zu den bisherigen Ausführungsbeispielen der Fig. 2 bis 4 ist hier im geschlossenen Zwischenkühlkreislauf 18 direkt vor dem Generatorkühler 11 ein zusätzlicher Vorschaltkühler 32 angeordnet, der über einen Eingang 31 und einen Ausgang 33 mit einem separaten Kühlmedium betrieben wird. Durch den separaten Vorschaltkühler 32 ergibt sich eine weitgehende Unabhängigkeit der Generatorkühlung von den übrigen Kühlstellen. Insbesondere kann das Kühlmedium unabhängig von den speziellen Bedürfnissen des übrigen Kühlsystems frei gewählt und den Erfordernissen des Generatorbetriebs optimal angepasst werden. Grundsätzlich ist es denkbar, dass als Kühlmedium für den Vorschaltkühler 32 das Hauptkühlwasser selbst verwendet wird. Der Vorteil gegenüber der Schaltung nach Fig. 1 liegt dann darin, dass der Vorschaltkühler unabhängig von den Zwischenkühlern 19, 20 speziell den Bedürfnissen der Generatorkühlung angepasst werden kann. Wenn das Hauptkühlwassersystem 34 (Fig. 6) mit einem Kühlturm 36 ausgerüstet ist, kann als Kühlmedium mit Vorteil das gegenüber dem Hauptkühlwasser kältere Kühlturmzusatzwasser oder eine Mischung aus Hauptkühlwasser und Kühlturmzusatzwasser verwendet werden. Noch günstiger lässt sich die Abfuhr der Generator-Verlustwärme gestalten, wenn als Kühlmedium eine auch gegenüber dem Kühlturmzusatzwasser noch kältere Kühlflüssigkeit verwendet wird. Hierzu kann beispielsweise auf ein Kaltwasser (Chiller-Wasser) zurückgegriffen werden, welches aus einer Kälteanlage stammt. Weiterhin ist es auch (gerade für ein Kraftwerk in einem Chemieunternehmen) denkbar, als Kühlmedium eine kalte Solelösung zu verwenden, wie sie in einem solchen Unternehmen häufig anfällt. Sollte Erdgas mit einem höheren als dem benötigten Druck zur Verfügung stehen, so ist anstelle eines zu kühlenden Kompressors eine Reduzierstation einzusetzen. Daher ist es schliesslich auch denkbar, dass das Kühlmedium durch Entspannung abgekühltes, kaltes Erdgas ist, welches beispielsweise zum Betreiben von Gasturbinen in dem Kraftwerk verwendet wird.

### Beispiel:

Durch den Zwischenkühlkreislauf 18 zirkuliert ein Massenstrom von 140 kg/s, der sich wiederum aufteilt in 71 kg/s (Generatorkühler 11) und 69 kg/s (übrige Kühler 12,..,17). Das Kühlwasser im Kreislauf 18 hat beim Eintritt in die Zwischenkühler 19, 20 eine Temperatur von ca. 35°C. Die Zwischenkühler 19, 20 werden vom Hauptkühlwasser mit einem Massenstrom von 140 kg/s und einer Temperatur von 23°C durchströmt und kühlen das Kühlwasser von ca. 35°C auf 27°C ab. 69 kg/s des Kühlwasser strömen durch die übrigen Kühler 12,..,17 und werden dort durch eine Verlustleistung von ca. 3300 kW auf ca. 38°C erwärmt. 71 kg/s strömen durch den Vorschaltkühler 32, werden dort durch einen Massenstrom von 71 kg/s von 8°C kaltem Stadtwasser auf ca. 19°C abgekühlt und erwärmen sich schliesslich im Generatorkühler 11 bei einer Verlustleistung von ca. 4000 kW auf ca. 32°C.

Es versteht sich von selbst, dass die Verwendung eines (oder mehrere) Vorschaltkühler 32 auch mit Aenderungen an den Zwischenkühlern 19, 20 kombinierbar ist, wie sie in den Beispielen der Fig. 2 und 3 wiedergegeben sind.

### BEZEICHNUNGSLISTE

- 10: Generatorkühlsystem
- 11: Generatorkühler
- 12: Oelkühler
- 13: Kesselpumpenkühler
- 14,15: Speisewasserpumpenkühler
- 16: Probeentnahmekühler
- 17: Brenngaskompressorkühler
- 18: Zwischenkühlkreislauf (geschlossen)
- 19,20: Zwischenkühler
- 21: Eingang (Hauptkühlwasser)
- 22: Wasserfilter
- 23: Ausgang (Hauptkühlwasser)
- 24: Eingang (Schutzmittel)
- 25: Dosiereinrichtung (Schutzmittel)
- 26,27: Kühlwasserpumpen (Zwischenkühlkreislauf)
- 28: Eingang (Zusatzwasser Zwischenkühlkreislauf)
- 29: Ausgleichsbehälter (Zwischenkühlkreislauf)
- 30,30': Eingang (Kühlturmzusatzwasser)
- 31: Eingang (Kühlmedium)
- 32: Vorschaltkühler
- 33: Ausgang (Kühlmedium)
- 34: Hauptkühlwassersystem
- 35: Hauptkondensator
- 36: Kühlturm
- 37: Kühlturmventilator
- 38: Rücklauf (Hauptkühlwasser)
- 39: Sammelbecken (Hauptkühlwasser)
- 40,41: Hauptkühlwasserpumpe
- 42: Bypassleitung
- 111,..,114: Einzelkühler (Generator)

## Patentansprüche

1. Generatorkühlsystem (10) für einen in einem Kraftwerk zur Stromerzeugung eingesetzten Generator, welcher Generator einen Generatorkühler (11) aufweist, der zusammen mit weiteren Kühlern (12,..,17) in einem geschlossenen Zwischenkühlkreislauf (18) angeordnet ist, welcher Zwischenkühlkreislauf (18) über wenigstens einen Zwischenkühler (19, 20) Wärme an ein Hauptkühlwassersystem (34) abgibt, dadurch gekennzeichnet, dass im Zwischenkühlkreislauf (18) Mittel vorgesehen sind, welche die Wärmeübertragung von dem Generatorkühler (11) in das Hauptkühlwassersystem (34) verbessern.

2. Generatorkühlsystem nach Anspruch 1, dadurch gekennzeichnet, dass der Generatorkühler (11) und die weiteren Kühler (12,..,17) im Zwischenkühlkreislauf (18) in Serie geschaltet sind, und dass der Generatorkühler (11) zwischen dem wenigstens einen Zwischenkühler (19, 20) und den weiteren Kühlern (12,..,17) angeordnet ist.

3. Generatorkühlsystem nach Anspruch 2, dadurch gekennzeichnet, dass der wenigstens eine Zwischenkühler (19, 20) vom Hauptkühlwasser durchflossen wird.

4. Generatorkühlsystem nach Anspruch 2, dadurch gekennzeichnet, dass das Hauptkühlwassersystem (34) mit einem Kühlturm (36) ausgerüstet ist, und dass der wenigstens eine Zwischenkühler (19, 20) von Kühlturmzusatzwasser durchflossen wird.

5. Generatorkühlsystem nach Anspruch 4, dadurch gekennzeichnet, dass der wenigstens eine Zwischenkühler (19, 20) auch vom Hauptkühlwasser durchflossen wird.

6. Generatorkühlsystem nach Anspruch 1, dadurch gekennzeichnet, dass das Hauptkühlwassersystem (34) mit einem Kühlturm (36) ausgerüstet ist, und dass der wenigstens eine Zwischenkühler (19, 20) von Kühlturmzusatzwasser durchflossen wird.

7. Generatorkühlsystem nach Anspruch 6, dadurch gekennzeichnet, dass der wenigstens eine Zwischenkühler (19, 20) auch vom Hauptkühlwasser durchflossen wird.

8. Generatorkühlsystem nach Anspruch 1, dadurch gekennzeichnet, dass in dem Zwischenkühlkreislauf (18) vor dem Generatorkühler (11) ein zusätzlicher Vorschaltkühler (32) angeordnet ist, welcher von einem Kühlmedium durchflossen wird.

9. Generatorkühler nach Anspruch 8, dadurch gekennzeichnet, dass das Kühlmedium Hauptkühlwasser ist.

10. Generatorkühler nach Anspruch 8, dadurch gekennzeichnet, dass das Hauptkühlwassersystem (34) mit einem Kühlturm (36) ausgerüstet ist, und dass das Kühlmedium Kühlturmzusatzwasser ist.

11. Generatorkühler nach Anspruch 8, dadurch gekennzeichnet, dass das Kühlmedium Kaltwasser aus einer Kälteanlage ist.

12. Generatorkühler nach Anspruch 8, dadurch gekennzeichnet, dass das Kühlmedium eine kalte Solelösung ist.

13. Generatorkühler nach Anspruch 8, dadurch gekennzeichnet, dass das Kühlmedium durch Entspannung abgekühltes, kaltes Erdgas ist.

14. Generatorkühler nach einem der Ansprüche 8 bis 13, dadurch gekennzeichnet, dass der wenigstens eine Zwischenkühler (19, 20) von Hauptkühlwasser durchflossen wird.

15. Generatorkühler nach einem der Ansprüche 8 bis 13, dadurch gekennzeichnet, dass das Hauptkühlwassersystem (34) mit einem Kühlturm (36) ausgerüstet ist, und dass der wenigstens eine Zwischenkühler (19, 20) von Kühlturmzusatzwasser durchflossen wird.

16. Generatorkühler nach einem der Ansprüche 8 bis 15, dadurch gekennzeichnet, dass der Generatorkühler (11) und die weiteren Kühler (12,..,17) im Zwischenkühlkreislauf parallel geschaltet sind.

17. Generatorkühlsystem nach einem der Ansprüche 8 bis 15, dadurch gekennzeichnet, dass der Generatorkühler (11) und die weiteren Kühler (12,..,17) im Zwischenkühlkreislauf (18) in Serie geschaltet sind, und dass der Generatorkühler (11) zwischen dem Vorschaltkühler (32) und den weiteren Kühlern (12,..,17) angeordnet ist.
